# EUROPÄISCHE PATENTSCHRIFT

(11) **EP 1 379 942 B1**
(45) Veröffentlichungstag und Bekanntmachung des Hinweises auf die Patenterteilung: **26.07.2006**
(21) Anmeldenummer: 01995566.5
(22) Anmeldetag: 04.12.2001
(51) Int. Cl.: G06F 9/44

(54) **PROGRAMMIERGERÄT**
PROGRAMMING DEVICE
APPAREIL DE PROGRAMMATION

(30) Priorität: 04.12.2000 DE 10060206
(43) Veröffentlichungstag der Anmeldung: 14.01.2004
(73) Patentinhaber: SIEMENS AKTIENGESELLSCHAFT, 80333 München (DE)
(72) Erfinder: WINDL, Helmut, 93077 Bad Abbach (DE)
(86) Internationale Anmeldenummer: PCT/DE2001/004548
(87) Internationale Veröffentlichungsnummer: WO 2002/046913

(56) Entgegenhaltungen:
- WO-A-00/54118
- US-A- 5 456 691
- US-A- 5 800 473

## Beschreibung

Die Erfindung betrifft ein Programmiergerät mit einem Software-Werkzeug gemäß dem Oberbegriff des Anspruchs 1.

Aus dem Siemens-Katalog ST 70, Kapitel 8, Ausgabe 1997, wie auch aus der Druckschrift WO 00/54118, ist ein Software-Werkzeug bekannt, das fertig programmierte, durch ein Anwenderprogramm aufrufbare Lösungen umfasst. Diese Lösungen in Form von so genannten Standardfunktionsbausteinen, z. B. Standardfunktionsbausteine in Form von Reglern oder Impulsformern, kann ein Anwender wiederum zu übergeordneten Funktionsbausteinen zusammenfassen. Derartige übergeordnete Funktionsbausteine, z. B. Funktionsbausteine in Form von Motorsteuerungen, sind Teil eines Steuerprogramms, welches in ein Automatisierungsgerät übertragbar und zur Steuerung eines technischen Prozesses vorgesehen ist.

Aus der Druckschrift US-A-5 800 473 ist ein Programmiergerät bekannt, welchem durch ein Implantat, z. B. ein Implantat in Form eines Herzschrittmachers, Objekte zuführbar sind, mit welchen ein Programm auf dem Programmiergerät aktualisiert werden kann.

Der vorliegenden Erfindung liegt die Aufgabe zugrunde, ein Programmiergerät der eingangs genannten Art zu schaffen, das einem Anwender Informationen über in das Programmiergerät und/oder in ein Automatisierungsgerät hinterlegbare Software-Bausteine bereitstellt.

Diese Aufgabe wird durch die im kennzeichnenden Teil des Anspruchs 1 angegebenen Maßnahmen gelöst.

Durch die Erfindung wird ein Anwender bei der Erstellung, Wartung und Pflege seines Steuerprogramms unterstützt, wobei die Software-Bausteine des Steuerprogramms Bausteine in Form von ladbaren Objekten, z. B. so genannte Organisations- und/oder Datenbausteine und/oder Systemfunctioncall und/oder -block und/oder Functioncall und/oder -block, sein können.

In einer Ausgestaltung der Erfindung gemäß den im Anspruch 2 angegebenen Maßnahmen erkennt ein Anwender, welche Software-Bausteine zur Erstellung eines Steuerprogramms im Programmiergerät und welche dieser Software-Bausteine bereits im Automatisierungsgerät hinterlegt sind. Es ist nicht erforderlich, alle Software-Bausteine des Steuerprogramms in das Automatisierungsgerät zu übertragen, sondern lediglich die fehlenden auf dem Programmiergerät angezeigten Software-Bausteine, was eine Zeitersparnis beim Laden der Bausteine in das Automatisierungsgerät bedeutet.

In einer weiteren Ausgestaltung der Erfindung gemäß den im Anspruch 3 angegebenen Maßnahmen erkennt ein Anwender, welche der im Programmiergerät und im Automatisierungsgerät hinterlegten Software-Bausteine übereinstimmen. Es ist somit sofort sichtbar, welche Bausteine noch in das Programmiergerät und/oder in das Automatisierungsgerät geladen werden müssen, um ein Steuerprogramm gemäß einer zu lösenden Steueraufgabe erstellen zu können.

Dadurch, dass während des Steuerbetriebs die im Automatisierungsgerät hinterlegten Software-Bausteine anzeigbar sind, wobei die Bausteine gekennzeichnet sind, welche nicht im Programmiergerät hinterlegt sind, kann ein Anwender erkennen, ob im Automatisierungsgerät Software-Bausteine hinterlegt sind, die nicht zu dem Steuerprogramm gehören. Derartige Software-Bausteine, z. B. Bausteine in Form von so genannten Organisations-Bausteinen, welche das Betriebssystem des Automatisierungsgerätes beim Auftreten von bestimmten Ereignissen startet, können beispielsweise von einer früheren Programmänderung herrühren.

Anhand der Zeichnung, in der ein Ausführungsbeispiel der Erfindung veranschaulicht ist, werden im Folgenden die Erfindung, deren Ausgestaltungen sowie Vorteile näher erläutert.

Es zeigen:
- Figur 1: eine schematische Darstellung eines mit einem Automatisierungsgerät verbundenen Programmiergerätes und
- Figur 2: eine erste und eine zweite Darstellung von Software-Bausteinen.

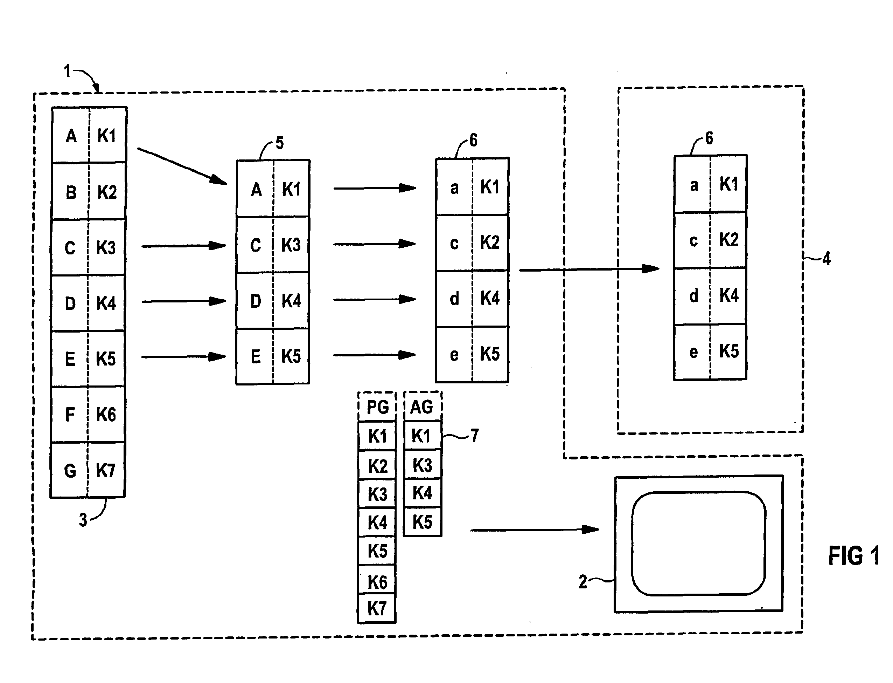

In Figur 1 ist mit 1 ein Programmiergerät bezeichnet, welches eine Anzeigeeinheit 2 aufweist und auf welchem Software-Bausteine A, B, ... G einer Bausteine-Bibliothek 3 in einem hier nicht dargestellten Speicher des Programmiergerätes hinterlegt sind. Die Software-Bausteine A, B, ... stellen Bausteine in einem Quellcode einer Programmiersprache dar, die in entsprechende Software-Bausteine a, c, ... einer Maschinensprache eines Automatisierungsgerätes 4 übersetzbar ist. Das Programmiergerät 1 ist mit dem Automatisierungsgerät 4 verbunden, auf welchem ein durch das Programmiergerät 1 erstellbares Steuerprogramm zur Steuerung eines technischen Prozesses gespeichert ist.
Es ist angenommen, dass ein Anwender auf dem Programmiergerät 1 gemäß einer zu lösenden Steueraufgabe ein Steuerprogramm 5 erstellt, wobei dazu ein hier nicht dargestelltes auf dem Programmiergerät ablauffähiges Software-Werkzeug vorgesehen ist. Das Steuerprogramm 5 umfasst lediglich vier Quellcode-Bausteine A, B, D, E, die das Software-Werkzeug aus einer Vielzahl von Quellcode-Bausteinen A, B, ..., G der Bausteine-Bibliothek 3 erzeugt, wobei das Software-Werkzeug diesen Software-Bausteinen eine Kennung K1, K2, ..., K6 zuweist. Das Software-Werkzeug übersetzt diese vier Quellcode-Bausteine A, C, D, E in einen für das Automatisierungsgerät lesbaren Maschinencode mit Bausteinen a, c, d, e und überträgt dieses maschinenlesbare Steuerprogramm 6 in das Automatisierungsgerät 4. Aufgrund der Kennungen K1, K2, ..., K6 ist es zu jedem Zeitpunkt sowohl im Online- als auch im Offline-Betrieb des Automatisierungsgerätes 4 möglich, sowohl die im Programmiergerät 1 hinterlegten als auch die im Automatisierungsgerät 4 hinterlegten Software-Bausteine zu erkennen, die z. B. in Form einer Tabelle 7 auf der Anzeigeeinheit 2 darstellbar sind. In dieser Tabelle sind in einer Spalte PG die im Programmiergerät 1 hinterlegten und in einer Spalte AG die im Automatisierungsgerät 4 hinterlegten Bausteine angezeigt, wobei z. B. ein Baustein-Erkennungsprogramm die Kennungen der im Programmiergerät 1 und im Automatisierungsgerät 4 abgespeicherten Software-Bausteine abfragt, die Kennungen vergleicht und die Vergleichsergebnisse auf der Anzeigeeinheit 2 anzeigt.

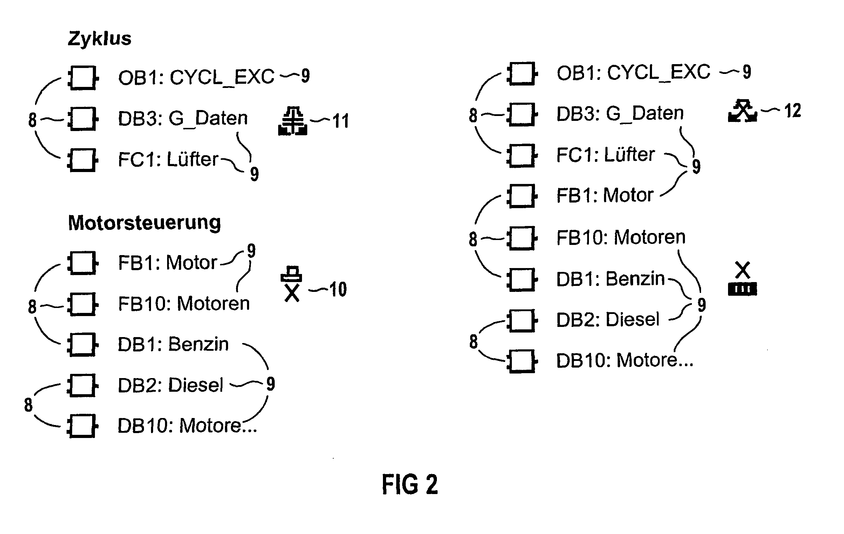

Im Folgenden wird auf Figur 2 verwiesen, in welcher Software-Bausteine OB1, DB3, FC1, FB3, FB10, DB1, DB2, DB4, DB10 in einer ersten Darstellung nach Figur 2a in Form einer Offline-Darstellung und in einer zweiten Darstellung nach Figur 2b in Form einer Online-Darstellung angezeigt sind. Die Software-Bausteine sind als so genannte Icons 8 dargestellt, wobei jedem Icon 8 ein Text 9 zugeordnet ist, welcher den Anwender über die Art des Bausteins informiert. In der Offline-Darstellung sind die Bausteine mit einer Kennung 10 versehen, welche im Programmiergerät 1 aber nicht im Automatisierungsgerät hinterlegt sind. Ferner sind in dieser Offline-Darstellung die im Programmiergerät 1 hinterlegten Software-Bausteine angezeigt, wobei die Bausteine mit einer Kennung 11 versehen sind, welche nicht mit den im Automatisierungsgerät 4 hinterlegten Bausteinen übereinstimmen.
In der Online-Darstellung während des Steuerbetriebs des Automatisierungsgerätes 4 werden die im Automatisierungsgerät hinterlegten Software-Bausteine auf der Anzeigeeinheit 2 angezeigt, wobei die Software-Bausteine eine Kennung 12 aufweisen, welche nicht im Programmiergerät hinterlegt sind.

## Patentansprüche

1. Programmiergerät mit einem Software-Werkzeug, welches zur Erstellung eines zur Steuerung eines technischen Prozesses geeigneten Steuerprogramms gemäß einer zu lösenden Steueraufgabe vorgesehen ist, wobei
- auf dem Programmiergerät (1) eine Vielzahl von Software-Bausteinen (A, B, ..., a, b, ...) hinterlegbar ist,
- das Steuerprogramm mindestens einen dieser Software-Bausteine (A, B, ..., a, b, ...) umfasst,
- das Steuerprogramm in ein Automatisierungsgerät (4) übertragbar und hinterlegbar ist, auf welchem das Steuerprogramm zur Steuerung des technischen Prozesses ablauffähig ist,
**dadurch gekennzeichnet, dass** das Programmiergerät versehen ist mit
- Mitteln zum Erkennen der Software-Bausteine (A, B, ..., a, b, ...), die im Programmiergerät (1) hinterlegt sind,
- Mitteln zum Erkennen der Software-Bausteine (A, B, ..., a, b, ...), die im Automatisierungsgerät (4) hinterlegt sind,
- Mitteln zum Vergleichen der im Programmiergerät hinterlegten Software-Bausteine (A, B, ..., a, b, ...) mit den im Automatisierungsgerät (4) hinterlegten Software-Bausteinen (A, B, ..., a, b, ...),
- Mitteln zur Anzeige des Vergleichsergebnisses.

2. Programmiergerät nach Anspruch 1, **dadurch gekennzeichnet, dass** in einer ersten Darstellung auf einer Anzeigeeinheit (2) des Programmiergerätes (1) die im Programmiergerät (1) hinterlegten Software-Bausteine (A, B, ..., a, b, ...) anzeigbar sind, wobei die jenigen Software-Bausteine (A, B, ..., a, b, ...) **gekennzeichnet** sind, welche nicht im Automatisierungsgerät (4) hinterlegt sind.

3. Programmiergerät nach Anspruch 2, **dadurch gekennzeichnet, dass** in der ersten Darstellung auf einer Anzeigeeinheit (2) des Programmiergerätes (1) die im Programmiergerät (1) hinterlegten Software-Bausteine (A, B, ..., a, b, ...) anzeigbar sind, wobei die jenigen Software-Bausteine (A, B, ..., a, b, ...) **gekennzeichnet** sind, welche nicht mit den im Automatisierungsgerät (4) hinterlegten übereinstimmen.

4. Programmiergerät nach einem der Ansprüche 1 bis 3, **dadurch gekennzeichnet, dass** während des Steuerbetriebs in einer zweiten Darstellung die im Automatisierungsgerät (4) hinterlegten Software-Bausteine (A, B, ..., a, b, ...) auf der Anzeigeeinheit (2) anzeigbar sind, wobei die jenigen Software-Bausteine (A, B, ..., a, b, ...) **gekennzeichnet** sind, welche nicht im Programmiergerät (1) hinterlegt sind.

## Claims

1. Programming device with a software tool, which is provided in order to create a control program according to a control task which is to be performed, suitable for controlling a technical process, whereby
- a multiplicity of software modules (A, B, ..., a, b, ...) can be stored on the programming device (1),
- the control program comprises at least one of these software modules (A, B, ..., a, b, ...),
- the control program can be transferred onto and stored on an automation device (4), on which the control program to control the technical process can run,
**characterized in that** the programming device is provided with
- means for recognizing the software modules (A, B, ..., a, b, ...) which are stored on the programming device (1),
- means for recognizing the software modules (A, B, ..., a, b, ...) which are stored on the automation device (4),
- means for comparing the software modules (A, B, ..., a, b, ...) stored on the programming device with the software modules (A, B, ..., a, b, ...) stored on the automation device (4),
- means for displaying the result of the comparison.

2. Programming device according to Claim 1, **characterized in that** the software modules (A, B, ..., a, b, ...) stored on the programming device (1) can be displayed in a first representation on a display unit (2) of the programming device (1), whereby those software modules (A, B, ..., a, b, ...) which are not stored on the automation device (4) are indicated.

3. Programming device according to Claim 2, **characterized in that** the software modules (A, B, ..., a, b, ...) stored on the programming device (1) can be displayed in the first representation on a display unit (2) of the programming device (1), whereby those software modules (A, B, ..., a, b, ...) which do not match the software modules stored on the automation device (4) are indicated.

4. Programming device according to one of Claims 1 to 3, **characterized in that**, during the control operation, the software modules (A, B, ..., a, b, ...) stored on the automation device (4) can be displayed in a second representation on the display unit (2), whereby those software modules (A, B, ..., a, b, ...) which are not stored on the programming device (1) are indicated.

## Revendications

1. Appareil de programmation ayant un outil logiciel qui est prévu pour la création d'un programme de commande convenant à la commande d'un processus technique selon une tâche de commande à résoudre,
- plusieurs modules logiciels (A, B, ..., a, b, ...) étant enregistrables sur l'appareil de programmation (1),
- le programme de commande comprenant au moins l'un de ces modules logiciels (A, B, ..., a, b, ...),
- le programme de commande étant transférable et enregistrable dans un appareil d'automatisation (4) sur lequel le programme de commande est exécutable pour la commande du processus technique,
**caractérisé par le fait que** l'appareil de programmation est muni :
- de moyens pour la reconnaissance des modules logiciels (A, B, ..., a, b, ...) qui sont enregistrés dans l'appareil de programmation (1),
- de moyens pour la reconnaissance des modules logiciels (A, B, ..., a, b, ...) qui sont enregistrés dans l'appareil d'automatisation (4),
- de moyens pour la comparaison des modules logiciels (A, B, ..., a, b, ...) enregistrés dans l'appareil de programmation aux modules logiciels (A, B, ..., a, b, ...) enregistrés dans l'appareil d'automatisation (4),
- de moyens pour l'indication du résultat de la comparaison.

2. Appareil de programmation selon la revendication 1, **caractérisé par le fait que** les modules logiciels (A, B, ..., a, b, ...) enregistrés dans l'appareil de programmation (1) sont affichables dans une première représentation sur une unité d'affichage (2) de l'appareil de programmation (1), ceux des modules logiciels (A, B, ..., a, b, ...) qui ne sont pas enregistrés dans l'appareil d'automatisation (4) étant **caractérisés** spécialement.

3. Appareil de programmation selon la revendication 2, **caractérisé par le fait que** les modules logiciels (A, B, ..., a, b, ...) enregistrés dans l'appareil de programmation (1) sont affichables dans la première représentation sur une unité d'affichage (2) de l'appareil de programmation (1), ceux des modules logiciels (A, B, ..., a, b, ...) qui ne coïncident pas avec ceux enregistrés dans l'appareil d'automatisation (4) étant **caractérisés** spécialement.

4. Appareil de programmation selon l'une des revendications 1 à 3, **caractérisé par le fait que**, pendant le fonctionnement de commande, les modules logiciels (A, B, ..., a, b, ...) enregistrés dans l'appareil d'automatisation (4) sont affichables dans une deuxième représentation sur l'unité d'affichage (2), ceux des modules logiciels (A, B, ..., a, b, ...) qui ne sont pas enregistrés dans l'appareil de programmation (1) étant **caractérisés** spécialement.
